# DEMANDE DE BREVET EUROPEEN

(11) **EP 0 933 339 A1**
(43) Date de publication de la demande: **04.08.1999**
(21) Numéro de dépôt: 99400209.5
(22) Date de dépôt: 29.01.1999
(51) Int. Cl.: C03C 1/00, C03C 8/02

(54) **Emaux céramiques comprenant au moins un déchet**

(30) Priorité: 29.01.1998 FR 9801011
(71) Demandeur: Demontage Valorisation Electronique Demovale, 92000 Nanterre (FR)
(72) Inventeur: Guy, Christelle, 75116 Paris (FR); Blanc, Jean-Jacques, 75116 Paris (FR)
(74) Mandataire: Ballot, Paul Denis Jacques

(57) **Abrégé**

L'invention concerne une utilisation d'au moins un déchet comme fritte céramique dans la fabrication d'émaux céramiques.

L'invention concerne également un émail comprenant un déchet comme fritte céramique.

## Description

La présente invention se rapporte à une utilisation de déchet dans la fabrication d'émaux céramiques.

La fabrication des émaux céramiques nécessite un équilibre particulier entre chaque constituant, de façon à répondre à des critères physico-chimiques particuliers.

Ces critères peuvent être classés selon trois niveaux, relatifs à trois étapes différentes et, successives dans le procédé de fabrication des émaux.

Concernant l'étape relative au bain d'émaux, les critères physico-chimiques sont la rhéologie de la suspension, le débit de pulvérisation et la cohésion du film.

Par ailleurs, concernant l'étape de la cuisson des émaux, il est nécessaire de surveiller la fusibilité, le palier de cuisson et la viscosité, à chaud, des émaux.

Enfin, lorsque les émaux sont cuits, il est nécessaire de vérifier leurs couleurs, l'accord dilatométrique avec le tesson ainsi que la résistance vis-à-vis des acides et des gaz.

Le tesson est défini comme étant le corps du carreau sur lequel est déposé l'émail. Le corps du carreau est essentiellement constitué d'argile et de feldspath.

Aussi, il subsiste le besoin de pouvoir utiliser un composant présentant les mêmes propriétés physico-chimiques que la fritte céramique, habituellement utilisée dans les procédés d'émaillage de l'état de la technique, ne nécessitant pas la préparation préalable d'un mélange vitreux, et ayant un coût inférieur à celui de la fritte céramique classiquement utilisée.

L'invention a donc pour objet une utilisation d'au moins un déchet comme fritte céramique dans la fabrication d'émaux céramiques.

L'avantage que présente l'invention, réside en ce que le déchet, qui joue un rôle identique à celui d'une fritte classiquement utilisée dans l'art antérieur, présente un coût financier inférieur à celui d'une fritte classique. Par ailleurs, l'invention permet d'utiliser des matières provenant de matériaux destinés à la décharge.

Par ailleurs, l'intérêt d'utiliser un déchet, comme fritte céramique, permet une diminution des coûts de revient lors de la fabrication des émaux céramiques.

L'invention a encore pour objet un émail céramique caractérisé en ce qu'il comprend un déchet comme fritte céramique.

De préférence, le déchet comprend au moins 50 % de silice. Le déchet peut comprendre en outre au moins un élément choisi parmi les oxydes des éléments suivants l'aluminium, les alcalins, les alcalino-terreux, le plomb, le zirconium, le cérium, le titane, l'antimoine, l'arsenic, les éléments colorants (tels que Cr₂O₃, CO₃O₄, NiO, Fe₂O₃, Nd₂O₃) et leurs mélanges.

Le déchet peut être du verre provenant de tube cathodique ou du verre, défectueux ou non, destiné ou non à la fabrication de tube cathodique. Les tubes cathodiques peuvent être issus des produits électroniques, tels que des produits électroniques en fin de vie, des produits défectueux. On entend par produits électroniques, les appareils contenant un tube cathodique, tels que les écrans d'ordinateurs, les téléviseurs, les Minitels, les écrans de contrôle.

Ces produits qui habituellement sont mis en décharge sont démantelés avant de séparer et de regrouper ensemble, les constituants de même nature chimique, tels que le verre, les matières plastiques, les métaux, les cartes électroniques.

Le verre provenant de tube cathodique peut être issu de différents constituants présents dans les tubes cathodiques.

Ces constituants sont les suivants:
- le col qui est l'extrémité du tube cathodique et qui abrite le canon à électrons;
- le cône qui est la partie arrière du tube sur laquelle est soudé le col;
- la dalle qui reste visible de l'extérieur, et
- la fritte qui est une soudure entre la dalle et le cône du tube pour des tubes cathodiques en couleur.

Les tableaux I et II ci-après rassemblent les concentrations de chaque élément chimique constituant, d'une part le verre issu du cône et/ou de la dalle pour le tableau I, et d'autre part le verre issu de la dalle couleur pour le tableau II. Ces résultats sont donnés en pourcentage massique.

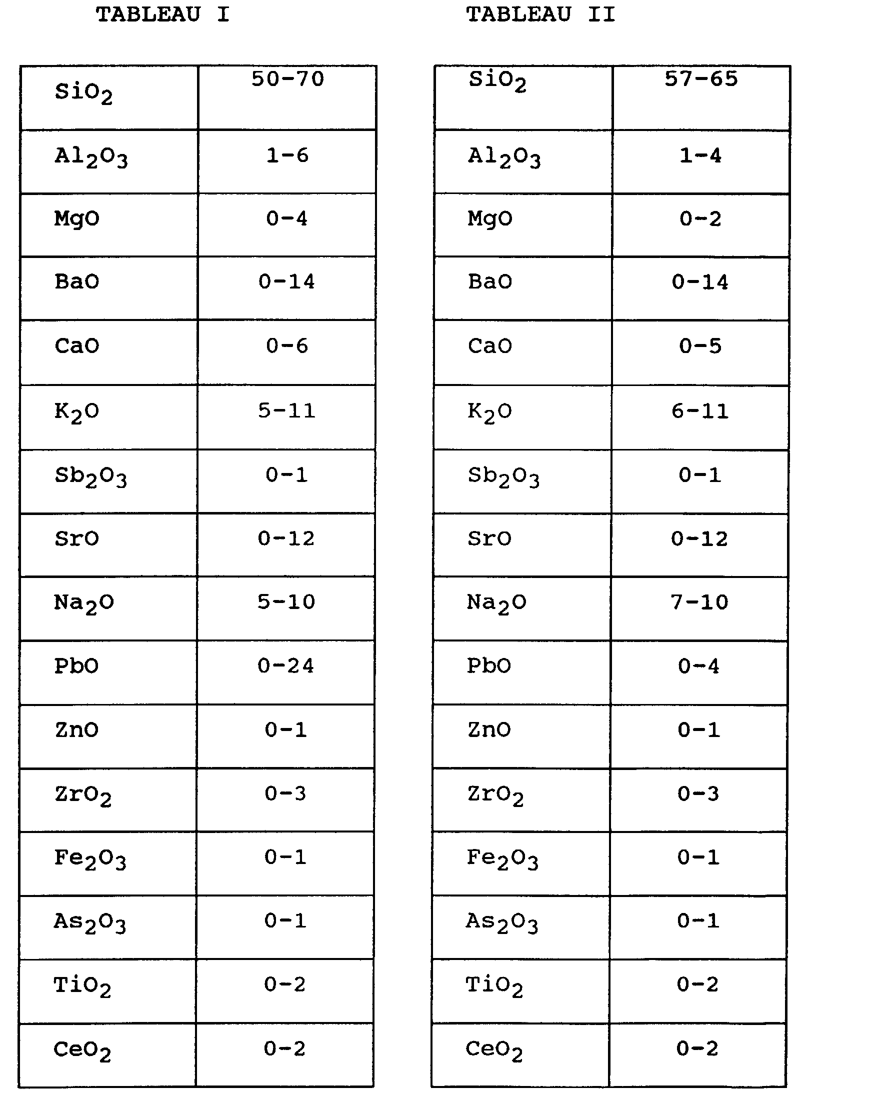

Le tableau I correspond à du verre provenant du cône et de la dalle.

Le tableau II correspond à du verre provenant de la dalle couleur.

L'intérêt que procure l'utilisation selon l'invention, réside dans le fait, qu'elle permet de réutiliser un des produits provenant de déchets constitués par les différents appareils électroniques, et par conséquent d'utiliser ce produit comme matière première.

Le verre provenant de tubes cathodiques peut avoir une granulométrie inférieure ou égale à 10 cm, de préférence inférieure ou égale à 2 cm et encore plus préférentiellement inférieure ou égale à 100 µm.

Le déchet peut être présent en une quantité allant de 0,1 % à 100 % en poids par rapport au poids total de la fritte céramique. Il peut être présent en une quantité allant de 0,1 à 50 % en poids, et de préférence de 0,1 à 16 % en poids par rapport au poids total de l'émail céramique.

L'émail céramique obtenu selon l'invention peut comprendre en outre au moins un additif choisi parmi la syénite néphéline, la silice, l'alumine, l'argile, la craie.

De préférence, l'additif est présent en une quantité allant de 0,1 à 99,9 % en poids par rapport au poids total de l'émail céramique.

La présente invention va maintenant être illustrée avec les exemples qui suivent et qui sont donnés à titre non limitatif.

### EXEMPLES

Des émaux céramiques ont été fabriqués selon des techniques connues en utilisant les compositions suivantes, rassemblées dans le tableau III ci-après. Les différentes quantités sont données en pourcentage pondéral.

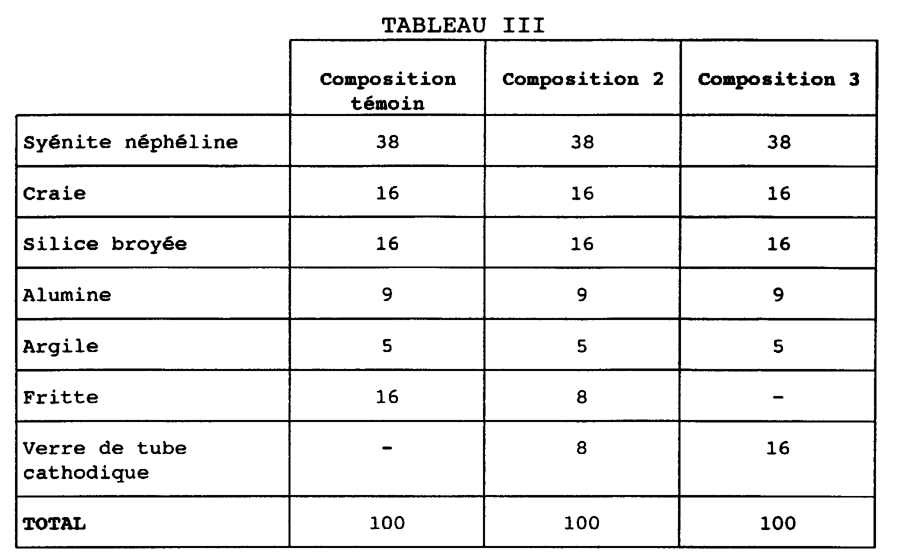

Les compositions 2 et 3 correspondent à l'invention et sont constituées de verre comprenant les éléments du tableau II sus-mentionné.

Différents essais physico-chimiques ont été effectués sur chacune de ces trois compositions.

Le matériel support, ou tesson, qui constitue le corps du carreau, et qui est constitué d'argile et de feldspath, est caractérisé par:
- la valeur d'absorption de l'eau, et
- la densité apparente.

Ces différentes mesures effectuées sur le matériau support, permettent de vérifier que le matériau support a bien atteint un état d'élaboration, nécessaire et, suffisant pour que l'émail, appliqué sur ce support, soit de qualité correcte, et de contrôler l'influence éventuelle de l'émail sur le support.

Le matériau support, encore appelé tesson, est recouvert par une surface émaillée. Cette surface émaillée se caractérise par différents paramètres physiques qui sont les suivants:
- l'aspect extérieur de l'émail (présence de piqûre de nappage),
- la brillance, déterminée à une température de 60 °C,
- la couleur, déterminée suivant le système connu (L, a, b),
- la résistance aux chocs thermiques.

Des vérifications sont, par ailleurs, effectuées sur la base des paramètres physiques précédents.

Les différentes valeurs numériques obtenues pour chacun de ces paramètres sont rassemblées dans le tableau IV ci-après :
- la composition témoin est une composition selon l'état de la technique, et
- les compositions 2 et 3 sont des compositions selon l'invention.

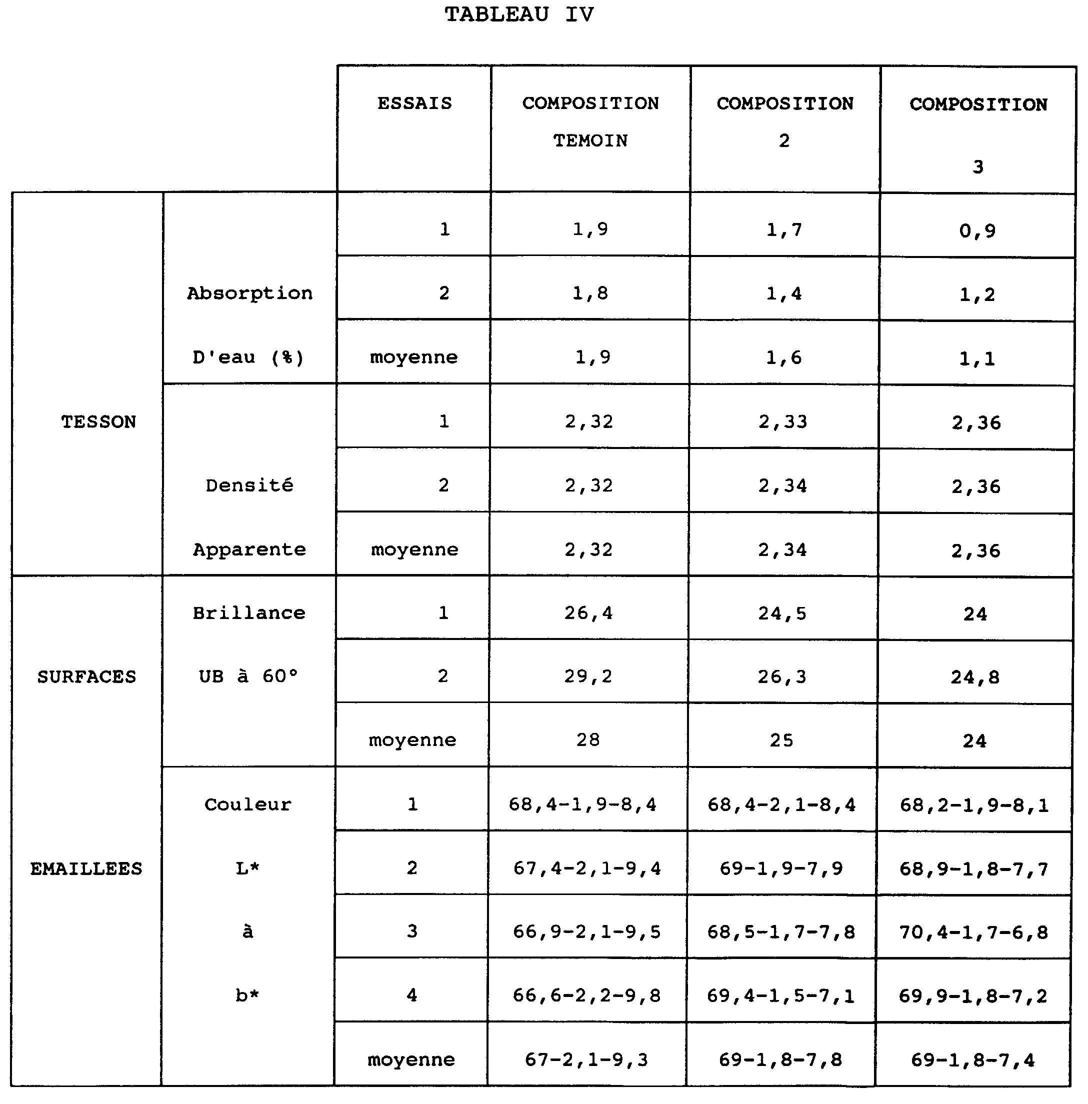

Différents modes de cuisson ont été effectués sur chacune de ces compositions.

Le premier mode est réalisé dans un four gradient. L'utilisation de ce four consiste à augmenter la température par paliers successifs, tout en observant les variations de l'aspect extérieur de la surface émaillée, incorporée dans le four.

Cette observation permet de déterminer, précisément, les valeurs de température de fusion et de grésage de l'émail.

Ce premier mode de cuisson permet de conclure que les compositions 2 et 3 selon l'invention, donnent une surface vitreuse satinée à une température allant de 1115 °C à 1130 °C, et un aspect extérieur sensiblement voisin à celui de la composition témoin.

Par ailleurs, les compositions 2 et 3, ne présentent aucun phénomène de pustule, ni de bouillonnement ni de cratère qui peuvent parfois être observés pour des compositions d'émail céramique comprenant un fondant dit précoce.

En conclusion générale de ce premier mode de cuisson, on peut noter, que les compositions 2 et 3 selon l'invention, montrent une valeur de température de grésage trè voisine de celle observée avec la composition témoin.

Un second mode de cuisson dit, cuisson rapide, consiste à réaliser une cuisson de l'émail à une température fixe, de 1180 °C pendant une durée de 90 minutes.

Les résultats du tableau IV, ci-dessus, montrent que les compositions 2 et 3 selon l'invention, ont une influence sur le tesson, et lui confèrent un niveau d'élaboration supérieur.

En effet, dans ces deux compositions, l'absorption d'eau diminue et passe de 2 à 1 % en comparaison avec la composition témoin. Par ailleurs, la densification est supérieure à celle de la composition témoin, puisqu'elle est de 2,36 au lieu de 2,32 pour la composition témoin.

Les émaux obtenus à partir des compositions 2 et 3 de l'invention présentent un aspect satiné très voisin de celui de l'émail obtenu selon la composition témoin.

L'émail obtenu avec la composition témoin apparaît relativement mat avec 28 Unités de Brillance. La brillance des compositions 2 et 3 de l'invention, diminue très légèrement du fait de la présence de verre provenant de tube cathodique. L'écart entre les compositions de l'invention et la composition témoin, est de 3 à 4 Unité de Brillance. Cet écart reste relativement faible, si l'on considère l'échelle totale des Unités de Brillance dans laquelle un émail blanc brillant de type sanitaire présente 95 Unité de Brillance, et un carreau de grès non émaillé présente 5 Unité de Brillance.

Concernant le paramètre relatif à la couleur, les résultats du tableau IV montrent que les compositions 2 et 3 de l'invention présentent des couleurs très proches de celles de la composition témoin.

En effet, le niveau de clarté est de 69 %, l'indice de rouge est de 2, et l'indice de jaune est d'environ 7 pour les compositions 2 et 3.

Pour la composition témoin, ces mêmes valeurs sont respectivement de 67 %, de 2 pour l'indice de rouge et de 9 pour l'indice de jaune.

En conclusion, les compositions 2 et 3 de l'invention, comprenant du verre provenant de tubes cathodiques, présentent des caractéristiques physico-chimiques très intéressantes et très proches de celles des émaux céramiques de l'état de la technique.

## Revendications

1. Utilisation d'au moins un déchet comme fritte céramique dans la fabrication d'émaux céramiques, ledit déchet étant du verre provenant de tube cathodique et comprenant au moins 50 % de silice et au moins un oxyde d'un élément choisi parmi les alcalins, l'aluminium, le plomb, le cérium, le titane, l'antimoine, l'arsenic, les éléments colorants choisis parmi Cr₂O₃, Co₃O₄, NiO, Nd₂O₃, les alcalino-terreux excepté le magnésium, et les mélanges de ces constituants.

2. Utilisation selon la revendication 1, caractérisée en ce que le déchet est présent en une quantité allant de 0,1% à 100% en poids par rapport au poids total de la fritte céramique.

3. Utilisation selon l'une des revendications 1 ou 2 caractérisée en ce que le déchet est présent en une quantité allant de 0,1 à 50% en poids et, de préférence de 0,1 à 16% en poids par rapport au poids total de l'émail.

4. Utilisation selon la revendication 1, caractérisée en ce que le verre est broyé, et présente une granulométrie inférieure ou égale à 10cm, de préférence inférieure ou égale à 2cm et plus préférentiellement inférieure ou égale à 100 µm.

5. Email céramique, caractérisé en ce qu'il comprend un déchet comme fritte céramique, ledit déchet étant du verre provenant de tube cathodique et comprenant au moins 50 % de silice et au moins un oxyde d'un élément choisi parmi les alcalins, l'aluminium, le plomb, le cérium, le titane, l'antimoine, l'arsenic, les éléments colorants choisis parmi Cr₂O₃, Co₃O₄, Nio, Nd₂O₃, les alcalino-terreux excepté le magnésium, et les mélanges de ces constituants.

6. Email selon la revendication 5 caractérisé en ce qu'il comprend au moins un additif choisi parmi la syénite néphéline, la craie , la silice, l'argile.

7. Email selon l'une des revendications 5 ou 6 caractérisé en ce que l'additif est présent en une quantité allant de 0,1 à 99,9% en poids par rapport au poids total de l'émail.
